# EUROPEAN PATENT SPECIFICATION

(11) **EP 2 086 821 B1**
(45) Date of publication and mention of the grant of the patent: **14.07.2010**
(21) Application number: 07870879.9
(22) Date of filing: 13.11.2007
(51) Int. Cl.: B62D 55/27, B62D 55/28

(54) **VERSATILE ENDLESS TRACK FOR LIGHTWEIGHT MOBILE ROBOTS**
VIELSEITIG VERWENDBARES ENDLOSBAND FÜR LEICHTE MOBILE ROBOTER
CHENILLE SANS FIN POLYVALENTE POUR ROBOTS MOBILES LEGERS

(30) Priority: 13.11.2006 US 858804 P
(43) Date of publication of application: 12.08.2009
(73) Proprietor: Raytheon Sarcos LLC, Waltham, MA 02451-1449 (US)
(72) Inventor: JACOBSEN, Stephen C., Salt Lake City, UT 84102 (US)
(74) Representative: Wombwell, Francis
(86) International application number: PCT/US2007/023867
(87) International publication number: WO 2008/076192

(56) References cited:
- WO-A-2006/068080
- CA-A1- 2 512 299
- DE-A1- 3 025 840
- US-A- 3 808 078
- US-A- 4 396 233
- US-B1- 6 540 310

## Description

### RELATED APPLICATIONS

This application claims priority to Unite States Provisional Patent Application No. 60/858,804, filed November 13, 2006 in the United States Patent and Trademark Office, and entitled, "Versatile Endless Track for Lightweight Mobile Robots".

### THE INVENTION

The present invention relates to small, unmanned ground robotic vehicles. More particularly, the present invention relates to a versatile endless track for a lightweight robotic vehicle.

### BACKGROUND OF THE INVENTION AND RELATED ART

Unmanned robotic vehicles can be deployed in a variety of applications and environments, including for example, search and rescue, military operations, and industrial operations. Unmanned robotic vehicles can help to avoid the need to expose humans to hazardous environments, such as unstable buildings, military conflict situations, and chemically, biologically, or nuclear contaminated environments.

Unmanned robotic vehicles face many challenges when attempting mobility. Terrain can vary widely, including for example, bumpy or smooth surfaces, firm or soft ground, loose and shifting materials, etc. For small robotic vehicles, the challenges become even greater. A vehicle optimized for operation in one environment may perform poorly in other environments.

The use of endless tracks are known to provide a good compromise which allows a robotic vehicle to accommodate a large variation in terrain types while maintaining relatively good traction and maneuverability For examples, tank-like vehicles using a pair of parallel endless tracks clan provide high stability in some environments.

For small robotic vehicles, however, the traction performance of endless tracks can be less than desired. In part, traction performance for small robotic vehicles can be poor because the robotic vehicles is relatively lightweight. Little downward force is applied to the endless track, resulting in reduced frictional forces between the endless track and the ground surface.

An example of a prior art endless track arrangement is disclosed in WO2006/068080 (Tokyo institute Technology).

### SUMMARY OF THE INVENTION

The present invention includes a versatile endless track system for a lightweight robotic vehicle as set forth in the appended claims.
In one embodiment, the versatile endless track system includes a flexible track on which a plurality of traction pads are disposed. At least two different traction pad types are included, where each type of traction pad has a different ground-interfacing profile designed to provide traction with respect to ground surfaces having different traction properties.

### BRIEF DESCRIPTION OF THE DRAWINGS

The present invention will become more fully apparent from the following description and appended claims, taken in conjunction with the accompanying drawings. Understanding that these drawings merely depict exemplary embodiments of the present invention, they are, therefore, not to be considered limiting of its scope. It will be readily appreciated that the components of the present invention, as generally described and illustrated in the figures herein, can be arranged and designed in a wide variety of different configurations. Nonetheless, the invention will be described and explained with additional specificity and detail through the use of the accompanying drawings in which:
FIG. 1 illustrates a perspective view of a versatile endless track mounted on a lightweight robotic vehicle according to an embodiment of the present invention;
FIG. 2 illustrates a perspective view of a versatile endless track in accordance with another embodiment of the present invention;
FIG. 3 illustrates a perspective view of a versatile endless track according to another embodiment of the present invention;
FIG. 4 illustrates a perspective view of a versatile endless track according to yet another embodiment of the present invention;
FIG. 5 illustrates a perspective view of one type of traction pad according to an embodiment of the present invention;
FIG. 6 illustrates a perspective view of another type of traction pad according to an embodiment of the present invention; and
FIG. 7 illustrates a flow diagram of a method for configuring an endless track with traction pads according to an embodiment of the present invention.

### DETAILED DESCRIPTION OF EXEMPLARY EMBODIMENTS

The following detailed description of exemplary embodiments of the invention makes reference to the accompanying drawings, which form a part hereof and in which are shown, by way of illustration, exemplary embodiments in which the invention may be practiced. While these exemplary embodiments are described in sufficient detail to enable those skilled in the art practice the invention, it should be understood that other embodiments may be realized and that various changes to the invention may be made without departing from the spirit and scope of the present invention. Thus, the following more detailed description of the embodiments of the present invention is not intended to limit the scope of the invention, as claimed, but is presented for purposes of illustration only and not limitation to describe the features and characteristics of the present invention, to set forth the best mode of operation of the invention, and to sufficiently enable one skilled in the art to practice the invention. Accordingly, the scope of the present invention is to be defined solely by the appended claims.

The following detailed description and exemplary embodiments of the invention will be best understood by reference to the accompanying drawings, wherein the elements and features of the invention are designated by numerals throughout.

In general, the environments faced by lightweight robotic vehicle can be highly variable, as lightweight robotic vehicles may be used indoors or outdoors, on land or water. The term "ground" is thus used broadly within the present application to refer generally to the surface on which the lightweight robotic vehicle is operating, which can include ground, vegetation, road surface, flooring, carpet, liquid surfaces, and the like. The highly variable environment encountered by lightweight robotic vehicles differs from that of traditional tracked vehicles, such as tanks or earth working equipment, which typically operate in very limited environments (e.g., outdoors on unprepared surfaces).

For example, earth working equipment often includes cleat bars on the tracks to help provide traction in soft or slippery conditions, such as mud or soft ground. The cleat bars sink into and engage with the ground, helping to reduce slippage of the tracks. Good performance is also obtained on hard ground, because the weight of the equipment is sufficiently large to develop large downward forces which translate into high friction (and thus traction) for portions of the track in contact with the ground.

In contrast, a lightweight robotic vehicle is less able to develop large downward force, and thus different approaches to developing traction are required. Although one approach is to use cleat profiles adapted for developing traction when lightly loaded, such a solution is likely to only perform well over a relatively narrow range of environmental conditions. For example, cleats might perform well when the robotic vehicle is operated over a very soft surface (e.g., sand or soil), but provide very little traction when operated over a very hard, smooth surface (e.g., glass or polished stone). Accordingly, a particular cleat or other traction device configuration is often a compromise solution that performs well over a relatively narrow range of surface conditions.

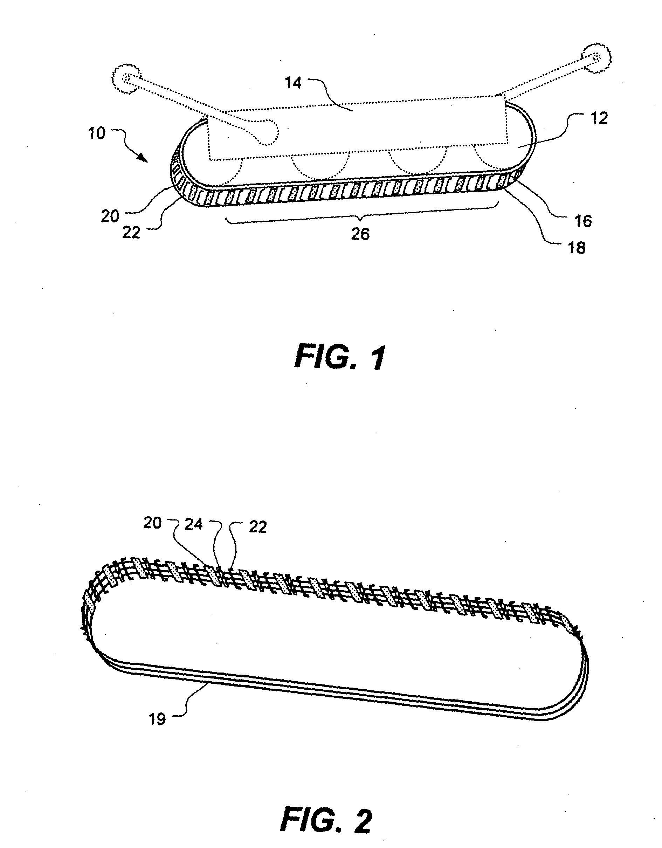

It has been recognized by the inventors of the present invention that a versatile endless track can provide traction over a wide range of conditions by including a number of different traction pads of different ground-interfacing profiles on the endless track. With reference to FIG. 1, shown is an illustration of a versatile endless track, according to a first exemplary embodiment of the present invention. The versatile endless track, shown generally at 10, is mounted on a lightweight robotic vehicle 14, threaded about a plurality of track supports 12. The track includes a flexible track 16. Disposed along the flexible track 16 are a plurality of traction pads 18. Different types 20, 22 of traction pads are included, each traction pad type having a different exposed ground-interfacing profile designed to provide traction with respect to ground surfaces having different traction properties.

An exposed portion 26 of the flexible track 16 engages with the ground when the lightweight robotic vehicle is in operation. It will be appreciated that the exposed portion is constantly changing as the flexible track is rotated around the plurality of track supports. Sufficient traction pads 18 of each type 20, 22 can be included so that at least one traction pad of each type is present on the exposed ground-engaging portion of the flexible track at all times.

The flexible track 16 can be constructed in various ways. For example, the flexible track can be a loop which is slid laterally over the track supports 12. Alternately, the track can be a long assembly which is threaded through the track supports after which ends of the flexible track are attached together to form a loop. The flexible track can be an elastic belt, for example of rubber or other elastomeric material. As another example, the flexible track can be two or more cables 19 on which the traction pads are threaded as shown in FIG. 2 in accordance with another embodiment of the present invention.

Generally, the lightweight robotic vehicle 14 includes drive unit which clauses the versatile endless track 16 to rotate about the track supports 12 providing propulsion of the lightweight robotic. For example, one of the track supports can provide a friction drive interface to the flexible track. Friction drive interfaces provide a benefit in that the flexible track need not include gear-like protrusions on the internal surface in order to interface to the drive unit. Friction drive interface is possible for lightweight robotic vehicles because the forces involved are relatively low (as compared, for example, to large heavy vehicles such as a tank or snowmobile).

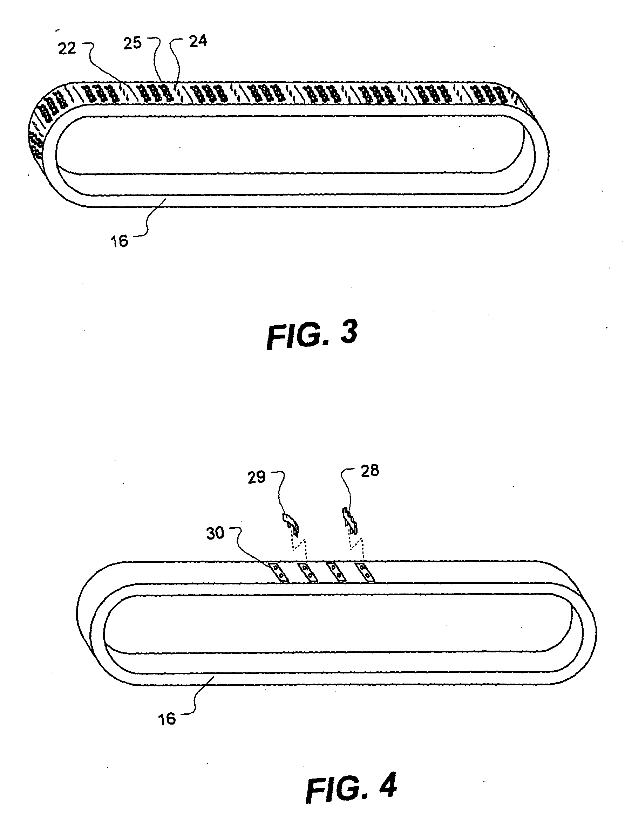

Various ways of attaching the traction pads 18 to the flexible track 16 are possible. For example, as shown in FIG. 2, the traction pads can be threaded onto flexible track which is formed from a plurality of cables 19. As another option, as shown in FIG. 3 the traction pads may be integrally formed with the flexible track, for example by molding the flexible track as single assembly, in accordance with an embodiment of the present invention. As another option, the traction pads may be formed of different materials and attached to the flexible track by glue, fasteners, and similar techniques. The traction pads may be removable, allowing for easy replacement or changing of the types of traction pads.

FIG. 4 illustrates a particular example of a technique for attaching the traction pads 28, 29 to the flexible track 16 in accordance with an embodiment of the present invention. The flexible track includes a plurality of receptacles 30 into which the traction pads can be inserted. For example, the traction pads can slide or snap into the receptacles. The traction pads can have a friction fit interface to the receptacle, allowing for manual insertion and removal of the traction pads by a person. A friction fit can be appropriate for the lightweight loading conditions of small robotic vehicles because the forces placed on the traction pad are relatively small. For example, lightweight robotic vehicles generally weigh less that 45.37 kg (100 pounds), and typically under 22.7 kg (50 pounds) although some lightweight robotic vehicles can weight less than 9 or even 4.5 kg (20 or even 10 pounds).

The traction pads 18 can be arranged in a sequential order, for examples as illustrated in FIG. 2, although this is not essential. In other words, for three traction pad types A, B, and C, the traction pads can be arranged in sequence A-B-C-A-B-C... all the way around the flexible track. Alternately, the traction pads can be arranged in different orders. For example, it may be desirable to include more of one traction pad type than other traction pad types due to differences in the traction provided. Accordingly, the traction pads may be arranged in a sequence such as A-A-A-B-C-A-A-A-B-C... where three traction pads of type A are provided for each traction pad of type B and type C. For example, FIG. 3 illustrates an alternate arrangement of different types of traction pads. Of course, many other arrangements are possible as will occur to one of skill in the art.

It is desirable that sufficient traction pads of each type are included so that at least one traction pad of each type is present on the ground-engaging portion of the flexible endless track at all times. This can help to ensure that adequate traction is provided at all times.

A versatile endless track 10 having two or more types of traction pads 18 can provide improved traction for a lightweight robotic vehicle 14 in a variety of conditions. Previously, endless track configurations have generally presented a uniform ground-interface profile that is a compromise design for a range of surface conditions. In contrast, the versatile endless track can include multiple traction pads, each traction pad type designed for good performance under specific conditions. For example, different types of traction pads can be defined by their differing ground-interfacing profiles. The flexible track 16 can have two, three, or more differing types of traction pads.

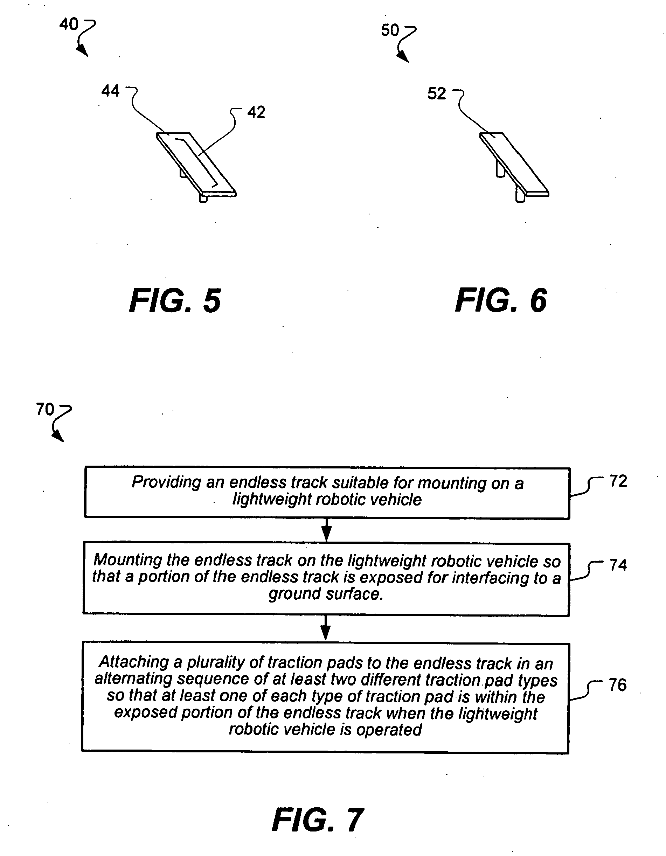

Various examples of traction pads will now be described, although various other traction pads will occur to one of skill in the art having possession of this disclosure. A first traction pad type can be designed to provide traction on a soft, friable surface. For example, FIG. 5 illustrates a traction pad 40 designed to help spread the weight of the lightweight robotic vehicle over an area to help avoid breaking the surface which could allow slippage of the track. The traction pad includes a low-profile projecting bar cleat 42 mounted on a substantially flat ground-interfacing surface 44.

A second traction pad type can be designed to provide traction on a hard, slippery surface. For example, FIG. 6 illustrates a sticky-pad 50 designed to provide a large, high coefficient of friction surface. The sticky-pad has a substantially flat ground-interfacing surface 52 which can include grit, non-drying adhesive, or similar high coefficient of friction material. Alternately, a traction pad design for use on a hard, slippery surface can include one or more suction cups.

Various other traction pad types and profiles can be used, including for example, flat pads (e.g., 20), cleats (e.g., 22), spikes (e.g., 24), tread patterns (e.g., 25), saw tooth profiles (e.g., 28) and water paddles (e.g., 29).

Because different traction pads are included on the versatile endless track to accommodate different conditions, in one embodiment the individual traction pad types may each be optimized to provide traction with respect to a ground surface having different traction properties. In other words, the individual traction pad types need not be compromise designs designed for more than one surface type. Thus, when designing a traction pad type for operation in sand, as an example, the performance of the traction pad in mud or hard ground may be ignored. This is possible because multiple traction pad types are included on the versatile endless track. When conditions are encountered for which one traction pad type provides poor performance, other traction pad types are likely to perform well. Thus, depending on the ground surface conditions, one type of traction pads may provide most of the traction while other types provide relatively little traction. Of course, the individual traction pads can also be designed to accommodate a range of surface conditions as well. Hence, great flexibility in the versatile endless track is obtained.

Versatile endless tracks as described above can be helpful in adapting the configuration of a lightweight robotic vehicle for a particular task. For example, different types of traction pads can be installed on a lightweight robotic vehicle depending on the environmental conditions expected for a planned operating environment of the lightweight robotic vehicle. A lightweight robotic vehicle, which is expected to operate on both solid land and on water, can include a mixture of paddle-type traction pads and cleat-type traction pads. As another example, a lightweight robotic vehicle that is expected to operate over a wide variety of surface conditions might include three or more different traction pad types, including for example, sticky-pads, short spikes, long spikes, bar cleats, suction cups, and water paddles. With a reconfigurable versatile endless track, where the traction pads are easily removed and replaced, a virtually unlimited number of different arrangements are possible.

FIG. 7 illustrates a method for configuring an endless track with traction pads in accordance with an embodiment of the present invention. The method, shown generally at 70, includes the step of providing 72 an endless track suitable for mounting a lightweight robotic vehicle. Various materials and configurations of endless tracks are described above. A next step of the method is mounting 74 the endless track on the lightweight robotic vehicle so that a portion of the endless track is exposed for interfacing to a ground surface. Various techniques for mounting the endless track on the lightweight robotic vehicle are described above. The method also includes the step of attaching 76 a plurality of traction pads to the endless track so that at least one of each type of traction pad is included within the exposed portion of the endless track when the lightweight robotic vehicle is operated. For example, the traction pads may be placed in a sequential order as described above.

The method can include replacing at least one of the plurality of traction pads with a traction pad of a different type. For example, the lightweight robotic vehicle can be reconfigured for a different operating environment by replacing one type of traction pads with a different type of traction pads. As a particular example, consider a first configuration where the traction pads types consist of alternating suction cups and spikes, designed to provide good traction on both a smooth, hard surface and a soft, penetrable surface. The spikes might be removed and replaced with sticky pads to provide good traction on both smooth, hard surfaces and rough, hard surfaces. As another example, a first configuration having two traction pad types might be rearranged to include a third traction pad type to provide increased versatility.

Summarizing and reiterating to some extent, a versatile endless track system in accordance with embodiments of the present invention provides flexibility in the configuration of an endless track for a lightweight robotic vehicle. A mix of different traction pad types can be included which correspond to a range of expected environments, where individual traction pads provide good traction properties under different conditions. Traction pads can be removed and replaced with different traction pad types to adapt the lightweight robotic vehicle to different conditions.

The foregoing detailed description describes the invention with reference to specific exemplary embodiments. However, it will be appreciated that various modifications and changes can be made without departing from the scope of the present invention as set forth in the appended claims. The detailed description and accompanying drawings are to be regarded as merely illustrative, rather than as restrictive, and all such modifications or changes, if any, are intended to fall within the scope of the present invention as described and set forth herein.

More specifically, while illustrative exemplary embodiments of the invention have been described herein, the present invention is not limited to these embodiments, but includes any and all embodiments having modifications, omissions, combinations (e.g., of aspects across various embodiments), adaptations and/or alterations as would be appreciated by those in the art based on the foregoing detailed description. The limitations in the claims are to be interpreted broadly based the language employed in the claims and not limited to examples described in the foregoing detailed description or during the prosecution of the application, which examples are to be construed as non-exclusive. For example, in the present disclosure, the term "preferably" is non-exclusive where it is intended to mean "preferably, but not limited to." Any steps recited in any method or process claims may be executed in any order and are not limited to the order presented in the claims. Means-plus-function or step-plus-function limitations will only be employed where for a specific claim limitation all of the following conditions are present: a) "means for" or "step for" is expressly recited in that limitation; b) a corresponding function is expressly recited in that limitation; and c) structure, material or acts that support that function are described within the specification. Accordingly, the scope of the invention should be determined solely by the appended claims and their legal equivalents, rather than by the descriptions and examples given above.

## Claims

1. A versatile endless track (10) usable by a lightweight mobile robot (14), the track comprising:
a flexible track (16) configured for threading about a plurality of track supports (12), and having a changing ground-engaging portion (26) of the flexible track (16) exposed for engagement with a ground surface as the flexible track is rotated around the plurality of track supports (12); and
a plurality of traction pads (18) disposed along the flexible track (16),
wherein at least two different types (20, 22) of traction pad (18) are included, each type of traction pad having a different ground-interfacing profile designed to provide traction with respect to ground surfaces having different traction properties, and
wherein sufficient traction pads (18) of each type (20, 22) are included so that at least one traction pad of each type is present on the ground-engaging portion (26) of the flexible track (16) at all times;
**characterized in that:**
said plurality of traction pads (18) are removable and replaceable.

2. The track of claim 1, wherein the flexible track (16) comprises an elastic belt to which the plurality of traction pads (18) are affixed.

3. The track of claim 1, wherein the flexible track (16) comprises a plurality of cables (19) on which the plurality of traction pads (18) are threaded.

4. The track of claim 1, wherein the plurality of traction pads (18) are removably attached to a corresponding plurality of receptacles (30) disposed on the flexible track (16).

5. The track of claim 1, wherein at least three different traction pad types (20, 22, 24) are included.

6. The track of claim 1, wherein each traction pad type is optimized to provide traction with respect to a ground surface having different traction properties.

7. The track of claim 1, wherein a first traction pad type (40) is designed to provide traction on a soft, friable surface and a second traction pad type is designed to provide traction on a hard, slippery surface.

8. The track of claim 1, wherein a first traction pad type is designed to provide traction on a firm surface and a second traction pad type is designed to provide traction on a soft surface.

9. The track of claim 1, wherein a first traction pad type is designed to provide traction on a solid surface and a second traction pad type is designed to provide traction on a liquid surface.

10. The track of claims 1, wherein at least one traction pad type (50) comprises a substantially flat ground-interfacing portion having a high coefficient of friction and a second traction pad type (42) comprises a projecting cleat.

11. The track of claim 1, wherein at least one traction pad type (42) comprises a projecting cleat and a second traction pad type (29) comprises a water paddle.

12. The track of claim 1, wherein each of the traction pad types are chosen from the group of traction pad types consisting of: a sticky pad (50), a bar cleat (22), a spike (24), a suction cup, and a water paddle (29).

13. A method of configuring an endless track (10) with traction pads (18) comprising
providing an endless track (10) suitable for mounting on a lightweight robotic vehicle (14);
mounting the endless track (10) on the lightweight robotic vehicle (14) so that a portion (26) of the endless track is exposed for interfacing to a ground surface; and
attaching a plurality of removable and replaceable traction pads (18) to the endless track in an alternating sequence of at least two different traction pad types so that at least one of each type of traction pad is within the exposed portion (26) of the endless track when the lightweight robotic vehicle is operated.

14. The method of claim 13 further comprising selecting the at least two different traction pad types from a predefined assortment of traction pad types, wherein the at least two traction pad types are selected to correspond to a planned operating environment.

15. The method of claim 13 further comprising replacing at least one of the plurality of traction pads with a traction pad of a different type.

## Patentansprüche

1. Eine anpassungsfähige Bandraupe (10) zur Verwendung durch einen leichtgewichtigen mobilen Roboter (14), wobei die Bandraupe aufweist:
eine flexible Raupenbahn (16) welche zum Aufziehen über eine Mehrzahl von Bahnunterstützungen (12) ausgebildet ist und wobei ein veränderbarer grundberührender Abschnitt (26) der flexiblen Raupenbahn (16) für eine Berührung mit einer Oberfläche eines Grundes freigelegt ist, wenn die flexible Raupenbahn um die Mehrzahl von Bahnunterstützungen (12) rotiert wird; und
einer Mehrzahl von Traktionselementen (18), welche entlang der flexiblen Raupenbahn (16) angeordnet sind, wobei wenigstens zwei verschiedene Arten (20, 22) von Traktionselementen (18) enthalten sind, wobei jede Art von Traktionselement ein jeweils unterschiedliches Profil zur Grundberührung aufweist, welches zur Bereitstellung von Traktion auf Bodenflächen mit verschiedenen Traktionseigenschaften ausgebildet ist, und
wobei ausreichend Traktionselemente (18) jeder Art (20, 22) enthalten sind, so dass wenigstens ein Traktionselement jedes Typs in dem grundberührenden Abschnitt (26) der flexiblen Raupenbahn (16) zu jeder Zeit vorhanden ist;
**dadurch gekennzeichnet, dass:**
die Mehrzahl von Traktionselementen (18) entfernbar und ersetzbar sind.

2. Die Bandraupe gemäß Anspruch 1, wobei die flexible Raupenbahn (16) einen elastischen Gurt aufweist, an welchen die Mehrzahl von Traktionselementen (18) befestigt ist.

3. Die Bandraupe gemäß Anspruch 1, wobei die flexible Raupenbahn (16) eine Mehrzahl von Kabeln (19) aufweist, auf welchen die Mehrzahl der Traktionselemente (18) aufgezogen sind.

4. Die Bandraupe gemäß Anspruch 1, wobei die Mehrzahl der Traktionselemente (18) entfernbar an einer entsprechenden Mehrzahl von Aufnahmen (30) befestigt sind, welche an der flexiblen Raupenbahn (16) angeordnet sind.

5. Die Bandraupe gemäß Anspruch 1, wobei wenigstens drei verschiedene Arten von Traktionselementen (20, 22, 24) enthalten sind.

6. Die Bandraupe gemäß Anspruch 1, wobei jede Art von Traktionselement zur Bereitstellung von Traktion bezüglich einer Untergrundoberfläche mit unterschiedlichen Traktionseigenschaften optimiert ist.

7. Die Bandraupe gemäß Anspruch 1, wobei eine erste Traktionselementart (40) zur Bereitstellung von Traktion auf einer weichen, krümeligen Oberfläche und eine zweite Traktionselementart zur Bereitstellung von Traktion auf einer harten, rutschigen Oberfläche ausgebildet ist.

8. Die Bandraupe gemäß Anspruch 1, wobei eine erste Traktionselementart ausgebildet ist, um Traktion auf einer harten Oberfläche und eine zweite Traktionselementart zur Bereitstellung von Traktion auf einer weichen Oberfläche ausgebildet ist.

9. Die Bandraupe gemäß Anspruch 1, wobei eine erste Traktionselementart zur Bereitstellung von Traktion auf einer festen Oberfläche ausgebildet ist und eine zweite Traktionselementart zur Bereitstellung von Traktion auf einer flüssigen Oberfläche ausgebildet ist.

10. Die Bandraupe gemäß Anspruch 1, wobei wenigstens eine Traktionselementart (50) einen im Wesentlichen flachen, grundberührenden Abschnitt mit einem hohen Reibungskoeffizienten aufweist und eine zweite Traktionselementart (42) eine vorstehende Querleiste (cleat) aufweist.

11. Die Bandraupe gemäß Anspruch 1, wobei wenigstens ein Traktionselementtyp (42) eine vorstehende Querleiste aufweist und ein zweiter Traktionselementtyp (29) eine Wasserschaufel (water paddle) aufweist.

12. Die Bandraupe gemäß Anspruch 1, wobei die Traktionselementtypen ausgewählt sind aus der Gruppe von Traktionselementtypen bestehen aus: einem Klebepad (50), einer Leiste (22), einem Dorn (24), einem Saugnapf und einer Wasserschaufel (29).

13. Ein Verfahren zum Erstellen eines Bandraupe (10) mit Traktionselementen (18), aufweisend
Bereitstellen einer Bandraupe (10), welche zum Anbringen an einem leichtgewichtigen Roboterfahrzeug (14) geeignet ist;
Anbringen der Bandraupe (10) an dem leichtgewichtigen Roboterfahrzeug (14), so dass ein Abschnitt (26) des Bandraupe zur Wechselwirkung mit der Oberfläche des Grundes freiliegt; und
Anbringen einer Mehrzahl von entfernbaren und ersetzbaren Traktionselementen (18) an der Bandraupe in einer alternierenden Abfolge von wenigstens zwei verschiedenen Arten von Traktionselementen, so dass wenigstens eines von jeder Art der Traktionselemente innerhalb des freiliegenden Abschnitts (26) des Endlosbandes liegt, wenn das leichtgewichtige Roboterfahrzeug betrieben wird.

14. Das Verfahren gemäß Anspruch 13, ferner mit dem Auswählen von wenigstens zwei verschiedenen Traktionselementarten aus einem vorgegebenen Sortiment von Traktionselementarten, wobei wenigstens zwei Traktionselementarten ausgewählt sind, um einer geplanten Betriebsumgebung zu entsprechen.

15. Das Verfahren gemäß Anspruch 13, ferner mit dem Ersetzen von wenigstens einem der Mehrzahl von Traktionselemente durch ein Traktionselement einer anderen Art.

## Revendications

1. Chenille sans fin polyvalente (10) pouvant être utilisée par un robot mobile léger (14), la chenille comprenant :
- une chenille souple (16) configurée pour se monter autour d'une pluralité de supports de chenille (12), et ayant une partie changeante de mise en prise avec le sol (26) de la chenille souple (16) exposée pour la mise en prise avec une surface de sol au fur et à mesure que la chenille souple tourne autour de la pluralité de supports de chenille (12) ; et
- une pluralité de patins de traction (18) disposée le long de la chenille souple (16),
dans laquelle au moins deux types différents (20, 22) de patin de traction (18) sont compris, chaque type de patin de traction ayant un profil différent d'interface avec le sol conçu pour fournir la traction par rapport aux surfaces de sol ayant différentes propriétés de traction, et dans laquelle on inclut suffisamment de patins de traction (18) de chaque type (20, 22) de sorte qu'au moins un patin de traction de chaque type est toujours présent sur la partie de mise en prise avec le sol (26) de la chenille souple (16) ;
**caractérisée en ce que** ladite pluralité de patins de traction (18) est amovible et remplaçable.

2. Chenille selon la revendication 1, dans laquelle la chenille souple (16) comprend une courroie élastique à laquelle est fixée la pluralité de patins de traction (18).

3. Chenille selon la revendication 1, dans laquelle la chenille souple (16) comprend une pluralité de câbles (19) sur laquelle la pluralité de patins de traction (18) est montée.

4. Chenille selon la revendication 1, dans laquelle la pluralité de patins de traction (18) est fixée de manière amovible à une pluralité correspondante de réceptacles (30) disposée sur la chenille souple (16).

5. Chenille selon la revendication 1, dans laquelle au moins trois types différents de patin de traction (20, 22, 24) sont inclus.

6. Chenille selon la revendication 1, dans laquelle chaque type de patin de traction est optimisé pour fournir la traction par rapport à une surface de sol ayant des propriétés de traction différentes.

7. Chenille selon la revendication 1, dans laquelle un premier type de patin de traction (40) est conçu pour fournir la traction sur une surface souple friable et un second type de patin de traction est conçu pour fournir la traction sur une surface dure glissante.

8. Chenille selon la revendication 1, dans laquelle un premier type de patin de traction est conçu pour fournir la traction sur une surface ferme et un second type de patin de traction est conçu pour fournir la traction sur une surface souple.

9. Chenille selon la revendication 1, dans laquelle un premier type de patin de traction est conçu pour fournir la traction sur une surface solide et un second type de patin de traction est conçu pour fournir la traction sur une surface liquide.

10. Chenille selon la revendication 1, dans laquelle au moins un type de patin de traction (50) comprend une partie d'interface avec le sol sensiblement plate ayant un premier coefficient de friction et un second type de patin de traction (42) comprend une traverse métallique en saillie.

11. Chenille selon la revendication 1, dans laquelle au moins un type de patin de traction (42) comprend une traverse métallique en saillie et un second type de patin de traction (29) comprend une rame.

12. Chenille selon la revendication 1, dans laquelle chacun des types de patin de traction est choisi dans un groupe de types de patin de traction comprenant un patin collant (50), une traverse métallique en forme de barre (22), une pointe (24), une ventouse et une rame (29).

13. Procédé pour configurer une chenille sans fin (10) avec des patins de traction (18), comprenant les étapes consistant à :
- fournir une chenille sans fin (10) appropriée pour être montée sur un véhicule robotisé léger (14) ;
- monter la chenille sans fin (10) sur le véhicule robotisé léger (14) de sorte qu'une partie (26) de la chenille sans fin est exposée pour s'interfacer avec une surface de sol ; et
- fixer une pluralité de patins de traction (18) amovibles et remplaçables sur la chenille sans fin dans une séquence alternée d'au moins deux types différents de patin de traction de sorte qu'au moins l'un de chaque type de patin de traction est dans la partie exposée (26) de la chenille sans fin lorsque le véhicule robotisé léger fonctionne.

14. Procédé selon la revendication 13, comprenant en outre l'étape consistant à sélectionner les au moins deux types différents de patin de traction à partir d'un assortiment prédéfini de types de patin de traction, dans lequel les au moins deux types de patin de traction sont sélectionnés pour correspondre à un environnement de travail planifié.

15. Procédé selon la revendication 13, comprenant en outre l'étape consistant à remplacer au moins l'un de la pluralité de patins de traction par un patin de traction d'un type différent.
